(19) Europäisches Patentamt
European Patent Office
Office européen des brevets

(11) **EP 0 821 544 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
*H04S 1/00* (2006.01)   *H04H 5/00* (2008.01)

(21) Anmeldenummer: **97112875.6**

(22) Anmeldetag: **25.07.1997**

(54) **Vorrichtung zum gleitenden Umsteuern eines Demodulators von Stereobetrieb auf Monobetrieb, und umgekehrt**

Device for sliding switching of a demodulator from stereophonic to monaural and vice versa

Dispositif de commutation glissante d'un démodulateur du mode stéréo en mode mono et vice versa

(84) Benannte Vertragsstaaten:
**FR GB IT**

(30) Priorität: **26.07.1996 DE 19630392**

(43) Veröffentlichungstag der Anmeldung:
**28.01.1998 Patentblatt 1998/05**

(73) Patentinhaber: **SGS-THOMSON MICROELECTRONICS GMBH**
**85630 Grasbrunn (DE)**

(72) Erfinder:
• **Kirchlechner, Peter**
**83104 Hohenthann (DE)**
• **Schambacher, Jörg**
**81677 München (DE)**
• **Lübbe, Jürgen**
**83553 Jacobneuharting (DE)**

(74) Vertreter: **Hirsch, Peter**
**Klunker Schmitt-Nilson Hirsch**
**Winzererstrasse 106**
**80797 München (DE)**

(56) Entgegenhaltungen:
DE-A1- 2 014 125     DE-A1- 4 111 709
JP-A- 1 186 026      US-A- 3 377 430
US-A- 4 032 717

## Beschreibung

Die Erfindung betrifft einen Stereodecoder, insbesondere aber eine Vorrichtung zum gleitenden Umsteuern eines Demodulators in einem Stereodecoder von Stereobetrieb auf Monobetrieb, und umgekehrt, wozu das Differenzsignal des von einem HF-Teil einem Eingang des Demodulators zugeführten Multiplex-Stereosignals mit einem veränderlichen Faktor auf das Summensignal des Multiplex-Stereosignals addiert wird, um an zwei Ausgängen getrennte Signale für die beiden Kanäle zu erhalten, wobei der Faktor durch einen im Signalweg zwischen dem Eingang und jeweils einem Ausgang liegenden Schalter realisiert wird, der von einem PWM-Signal (Pulse Width Modulation-Signal) angesteuert wird, dessen Tastverhältnis nach Maßgabe eines Feldstärkensignals verändert wird, wozu dieses Feldstärkensignal mit einem Referenz-Dreiecksignal verglichen wird, dessen Amplitude sich zwischen einem oberen und einem unteren Grenzwert ändert.

Um in einem Radio, beispielsweise einem Autoradio, einen sauberen Stereo-Empfang zu ermöglichen, muß die Feldstärke des Empfangssignals ausreichend groß sein. Bei zu geringer Feldstärke kommt es zu akustisch unangenehmen Störungen. Deshalb besitzen viele Autoradios eine Umschalttaste zum Umschalten auf Monobetrieb, falls der Empfang wegen zu geringer Feldstärke schlecht wird. Bei Monobetrieb gibt es dann keine oder weniger Störungen. Der Benutzer des Radios nimmt die Umschaltung von Hand vor, wenn der Empfang nach seinem Gefühl zu schlecht ist. Später kann dann durch Rückschalten festgestellt werden, ob wieder ein guter Stereoempfang möglich ist.

Man kann nun daran denken, statt der manuellen Umschaltung am Gerät selbst eine automatische Umschaltung vorzunehmen. Hierzu kann man das im HF-Teil des Radios gewonnene Feldstärkensignal z. B. mit einem Schwellenwert vergleichen, um abhängig von der Amplitude des Feldstärkensignals auf Stereobetrieb oder Monobetrieb zu schalten.

Man kann aber auch diesen Umschaltvorgang gleitend vornehmen, ebenfalls abhängig von der Amplitude des Feldstärkensignals. Eine derartige Vorrichtung wird in der Veröffentlichung US-A-4332717 näher erläutert. In modernen Kraftfahrzeugradios (und ähnlichen Geräten) erfolgt der Großteil der gesamten Signalverarbeitung in einer Kombination aus Stereodecoder und Audioprozessor. Dem als integrierte Schaltung ausgebildeten Stereodecoder wird vom HF-Teil das Ausgangssignal des ZF-Demodulators zugeführt, außerdem das bereits erwähnte Feldstärkensignal. Innerhalb des Stereodecoders erfolgen dann die Beseitigung des Pilotsignals, die Kanaltrennung, eine Tiefpaßfilterung zur Bedämpfung und dergleichen. Dem aus Steredecoder und Audioprozessor gebildeten Audiosignalprozessor werden außerdem Signale von einem möglicherweise vorhandenen Kassettenteil oder einem CD-Player zugeführt. Ferner finden im Audiosignalprozessor die Einstellung der Lautstärke, Einstellung von Höhen und Tiefen und dergleichen statt.

Wenn man nun in einem solchen Audiosignalprozessor eine mit-integrierte Schaltung vorsieht, die ein gleitendes Umsteuern zwischen Stereobetrieb und Monobetrieb abhängig von einem Feldstärkensignal durchführt, indem das Feldstärkensignal mit einem Referenz-Dreiecksignal zur Bildung eines PWM-Signals verglichen wird und dieses PWM-Signal entsprechend seinem Tastverhältnis (Impulslänge : Impulspause) einen Signalweg zwischen Eingang und Ausgang des Demodulators auf- und zusteuert, so muß bei der Montage eines solchen Audiosignalprozessors in einem Radiogerät (oder allgemeiner: Audiogerät) eine Justierung vorgenommen werden, damit die beiden Grenzwerte für den veränderlichen Faktor festgelegt werden.

Zwischen den beiden Grenzwerten verändert sich der Faktor kontinuierlich, oberhalb des oberen Grenzwerts gibt es vollen Stereobetrieb, und unterhalb des unteren Grenzwerts gibt es ausschließlich Monobetrieb.

Diese Grenzwerte werden bei der Justierung im Zuge der Herstellung des Audiogeräts eingestellt, wenn der als integrierte Schaltung ausgebildete Audiosignalprozessor eingebaut wird. Diese Justierung ist erforderlich, weil die Amplitude des dem Prozessor im Betrieb zugeführten Feldstärkensignals nicht genormt ist und von Hersteller zu Hersteller Schwankungen unterliegen kann. Mit Hilfe der Justierung wird erreicht, daß der gleitende Übergang zwischen Monobetrieb und Stereobetrieb dann tatsächlich in optimaler Weise erfolgt, d. h., daß möglichst wenig Störungen auftreten und gleichzeitig Stereobetrieb stattfindet, sobald dies die vorhandene Feldstärke zuläßt.

Bislang war es bei der oben erläuterten Justierung üblich, den Chip des Audioprozessors extern mit Widerständen zu beschalten, wobei durch den Hersteller des Audiogeräts dann mittels geeignet ausgewählter Widerstandswerte die Justierung vorgenommen wurde.

Nun ist aber die Beschaltung eines IC-Chips mit externen Komponenten nicht nur zeitraubend und kostspielig, sondern es müssen auch entsprechende Anschlüsse an dem Chip bzw. an dem Chip-Gehäuse vorhanden sein.

Der Erfindung liegt die Aufgabe zugrunde, eine Vorrichtung zum Umsteuern zwischen Stereobetrieb und Monobetrieb in Verbindung mit einem als integrierte Schaltung ausgebildeten Stereodecoder anzugeben, die unter Verzicht auf externe Komponenten eine Justierung des Referenz-Dreiecksignals ermöglicht.

Gelöst wird diese Aufgabe erfindungsgemäß dadurch, daß der Stereodecoder mindestens ein Grenzwertspeicherregister aufweist, in das von außerhalb des Stereodecoders ein digitaler Grenzwert eingebbar ist, der in eine Analogspannung umgesetzt und als Grenzwert einem Dreiecksignalgenerator zugeführt wird.

Vorzugsweise sind zwei Grenzwertspeicherregister vorgesehen, in denen digital ein oberer und ein unterer Grenzwert für das Dreiecksignal eingestellt wird.

Die Erfindung macht sich den Umstand zunutze, daß der Audiosignalprozessor Eingänge für digitale Signale enthält. Ein Beispiel für solche Signale ist ein Lautstärken-Einstellsignal, welches dem Audiosignalprozessor als digitales Signal zugeführt wird. Über solche Eingänge können von außen her die genannten Grenzwerte in die Register eingegeben werden. Die in den Registern gespeicherten Digitalwerte werden dann in Analogspannungen umgesetzt und als Grenzwertspannungen dem Dreiecksignalgenerator zugeführt.

Solche Dreiecksignalgeneratoren sind in verschiedensten Ausführungsformen bekannt. Grundsätzlich wird durch einen zyklisch wiederholten Lade- und Entladevorgang einer Kondensatoranordnung ein Dreiecksignal erzeugt. Der Begriff "Dreiecksignal" umfaßt hier auch ein Sägezahnsignal oder ein sägezahnähnliches Signal, bei dem eine Signalspitze jeweils abgeflacht ist. Die kleinste und die größte Amplitude des Dreiecksignals entsprechen dem unteren bzw. dem oberen Grenzwert. Diese Grenzwerte des Dreiecksignals bestimmen den zeitlichen Verlauf des Dreiecksignals und damit des mit Hilfe dieses Dreiecksignals gewonnenen PWM-Signals. In an sich bekannter Weise wird zur Bildung des PWM-Signals das Dreiecksignal mit einem im wesentlichen konstanten Signal (im vorliegenden Fall mit dem Feldstärkensignal) verglichen, und die Schnittpunkte zwischen dem Dreiecksignal und dem konstanten Signal legen die Vorderflanken und Rückflanken des PWM-Signals fest. Dies wird weiter unten noch näher erläutert.

Da das gewonnene PWM-Signal den im Signalweg des zur Signaltrennung verwendeten Demodulators liegenden Schalter auf- und zutastet, ändert sich der Anteil des mit dem Summensignal (L+R) summierten Differenzsignals (L-R). Bei sehr großem Tastverhältnis entsprechend einem sehr großen Feldstärkensignal bleibt der genannte Schalter sehr lange oder dauernd geschlossen, so daß der Faktor des Differenzsignals groß oder maximal ist und dementsprechend Stereobetrieb erfolgt. Bei schwachem Feldstärkesignal wird das Tastverhältnis des PWM-Signals klein und dementsprechend wird die Zeitspanne des Schließens des Schalters sehr kurz, im Grenzfall bleibt der Schalter ständig geöffnet, so daß nur das Summensignal des Multiplex-Stereosignals für den Monobetrieb an den Ausgang des Demodulators gelangt.

Im folgenden wird ein Ausführungsbeispiel der Erfindung anhand der Zeichnung näher erläutert. Es zeigen:

Fig. 1    eine vereinfachte schematische Darstellung eines Teils eines Demodulators für einen der beiden Kanäle;

Fig. 2    eine Prinzip-Schaltskizze eines Vergleichers zum Erzeugen eines PWM-Signals;

Fig. 3    ein Blockschaltbild eines Dreiecksignalgenerators mit veränderlichen Grenzwert-Spannungen;

Fig. 4    eine detaillierte Ansicht eines Dreiecksignals und eines daraus gewonnenen PWM-Signals; und

Fig. 5    den hier interessierenden Teil des Spektrums des Eingangssignals des in einem Audiosignalprozessor befindlichen Demodulators.

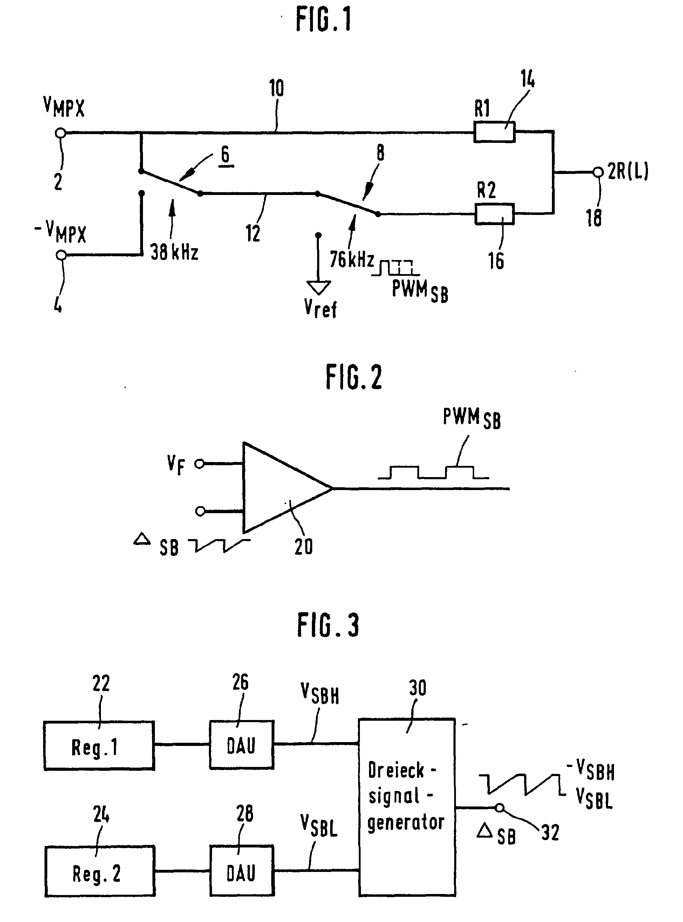

Bevor ein Ausführungsbeispiel der Erfindung anhand der Fig. 3 näher erläutert wird, soll kurz das Prinzip der Signalverarbeitung bei der Demodulation des von dem ZF-Demodulator kommenden Signals erläutert werden.

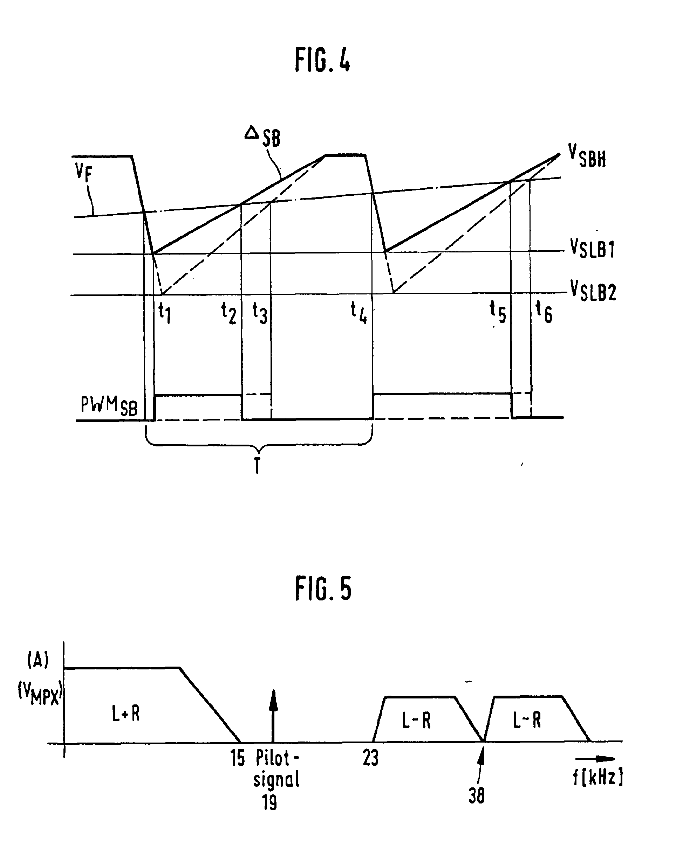

Fig. 5 zeigt das Spektrum des dem Demodulator zugeführten Signals. Im unteren Frequenzbereich bis 15 KHz befindet sich das Summensignal des Multiplex-Stereosignals, welches hier mit $V_{MPX}$ bezeichnet wird. Aus dem 19 KHz betragenden Pilotsignal kann der unterdrückte Träger von 38 KHz zum Demodulieren des Differenzsignals L-R gewonnen werden.

Von einem im folgenden kurz zu beschreibenden Demodulator werden die getrennten Signale für den linken und den rechten Kanal gemäß folgenden Gleichungen gewonnen:

$$2L = L+R + k(L-R)$$

$$2R = L+R - k(L-R)$$

mit k = 0.....1.

Wie man sieht, gibt es reinen Monoempfang, wenn der Koeffizient k den Wert 0 hat. Ist k = 1, ergibt sich Vollstereoempfang. Bei Werten zwischen 0 und 1 wird die Kanaltrennung um so schwächer, je kleiner der Wert k wird.

Fig. 1 zeigt in schematisierter Form für einen der beiden Kanäle, hier den rechten Kanal, den zur Kanaltrennung dienenden Demodulatorteil. Zwei Eingängen 2 und 4 wird das Multiplex-Stereosignal $V_{MPX}$ bzw. -$V_{MPX}$ zugeführt. Das Signal $V_{MPX}$ gelangt dauernd über einen ungeschalteten Signalweg 10 und einen Widerstand 14 (R1) an einen Ausgang 18 des Demodulatorteils, der auch als Summierpunkt fungiert.

Von dem Eingang 4 gelangt das Signal -$V_{MPX}$ über einen ersten Schalter 6 auf einen geschalteten Signalweg 12. Der Schalter 6 ist z. B. ein Transistorschalter und wird mit einer Frequenz von 38 KHz (entsprechend der Trägerfrequenz) zwischen den Eingängen 2 und 4 umgeschaltet. In dem geschalteten Signalweg 12 liegt ein weiterer Schalter 8, der zur gleitenden Umschaltung zwischen Stereobetrieb und Monobetrieb dient. Ohne diesen Schalter gelangte das Differenzsignal (L-R) über den Widerstand 16 (R2) an den Ausgang 18. Die beiden Widerstände 14 und 16 bestimmen das Verhältnis, mit dem die beiden Komponenten (L+R) und (L-R) am Ausgang 18 summiert werden.

Wäre der Schalter 8 dauernd geschlossen, erhielte man am Ausgang 18 stets das Signal 2R (für den anderen, in Fig. 1 nicht dargestellten linken Kanal entsprechend das Signal 2L). Wäre der Schalter 8 andauernd geöffnet, so gelangte nur das Summensignal (L+R) an den Ausgang, was dem Monobetrieb entspricht, während das Differenzsignal (L-R) unberücksichtigt bliebe.

Zur gleitenden Umschaltung zwischen Monobetrieb und Stereobetrieb wird der Schalter 8 mit einem Impulsbreitensignal $PWM_{SB}$ angesteuert, dessen Tastverhältnis abhängig von der Empfangsfeldstärke kontinuierlich geändert wird zwischen einem Minimal- und einem Maximalwert. Der Minimalwert entspricht einem Tastverhältnis von "0", d. h. es sind keine Impulse vorhanden, so daß der Schalter 8 stets geöffnet bleibt. Der Maximalwert entspricht der maximalen Impulsbreite, so daß der Schalter 8 praktisch immer geschlossen ist.

Fig. 2 zeigt schematisch einen Vergleicher 20, mit dessen Hilfe das Siganl $PWM_{SB}$ (der Index SB bezieht sich auf den Begriff "Stereo Blend", also das gleitende Umschalten zwischen Monobetrieb und Stereobetrieb) erzeugt wird. An einen Eingang des Vergleichers wird das Feldstärkensignal $V_F$ gelegt, an den anderen Eingang ein Dreiecksignal $\Delta_{SB}$.

Die Erzeugung des PWM-Signals ist in Fig. 4 näher erläutert. Das Feldstärkensignal $V_F$ ist durch eine strichpunktierte Linie dargestellt. Das Dreiecksignal $\Delta_{SB}$ schwankt zwischen einem oberen Pegel $V_{SBH}$ und einem unteren Pegel $V_{SBL1}$ oder $V_{SBL2}$. Hier ist der untere Pegel einstellbar, was durch die zwei alternativen unteren Grenzwerte $V_{SBL1}$ bzw. $V_{SBL2}$ angedeutet ist. Alternativ oder zusätzlich kann auch der obere Grenzwert $V_{SBH}$ eingestellt werden. Durch die Veränderung mindestens eines Grenzwerts läßt sich der zeitliche Verlauf des Dreiecksignals beeinflussen. Schneidet das Dreiecksignal $\Delta_{SB}$ das Feldstärkensignal $V_F$ in negativer Richtung, wie es beim Zeitpunkt $t_1$ der Fall ist, liefert der Vergleicher 20 gemäß Fig. 2 einen ansteigenden Impuls. Schneidet das Dreiecksignal $\Delta_{SB}$ das Signal $V_F$ in positiver Richtung, fällt das Ausgangssignal des Vergleichers von hohem Pegel auf niedrigen Pegel ab. Hierdurch entsteht eine Impulsfolge, und abhängig davon, wie groß der Pegel des Signals $V_F$ ist, werden relativ lange oder relativ kurze Impulse erzeugt.

Wenn man nun beispielsweise den unteren Schwellenwert des Signals $\Delta_{SB}$ absenkt, so ändert sich das zeitliche Verhalten des Dreiecksignals in der Weise, daß das Dreiecksignal das Signal $V_F$ zu einem anderen Zeitpunkt schneidet, hier beispielsweise zu einem Zeitpunkt $t_3$. Demzufolge ändert sich auch das PWM-Signal $PWM_{SB}$, was durch die gestrichelte Impulsverlängerung zwischen den Zeitpunkten $t_2$ und $t_3$ in Fig. 4 dargestellt ist. Auch die nachfolgenden Impulse des Signals $PWM_{SB}$

verändern sich.

Aus der obigen Erläuterung ist also ersichtlich, daß man durch Verändern mindestens einer von der oberen und der unteren Spannungsschwelle des Dreiecksignals dessen zeitlichen Verlauf so ändert, daß eine Justierung des PWM-Signals, wie es unten in Fig. 4 gezeigt ist, möglich ist.

Fig. 3 zeigt als Blockschaltbild einen Dreiecksignalgenerator 30, der das Dreiecksignal $\Delta_{SB}$ an seinem Ausgang 32 liefert. Dreiecksignalgeneratoren können in verschiedener Weise ausgebildet sein. Im vorliegenden Zusammenhang ist wichtig, daß die Form des Dreiecksignals durch Vorgabe des oberen und des unteren Schwellenwerts $V_{SBH}$ bzw. $V_{SBL}$ geändert wird, ohne daß jedoch die Frequenz und die Phasenlage des Dreiecksignals beeinflußt werden.

Es sind zwei Register 22 und 24 in Fig. 3 vorgesehen (Reg. 1; Reg. 2). In jedem Register wird über eine hier nicht dargestellte digitale Eingabeeinrichtung ein Digitalwert eingegeben, und jeder Digitalwert wird aus dem zugehörigen Register über einen Digital-Analog-Umsetzer 26 bzw. 28 in ein Analog-Spannungssignal entsprechend dem oberen Schwellenwert $V_{SBH}$ und dem unteren Schwellenwert $V_{SBL}$ umgesetzt. In dem Dreiecksignalgenerator 30 erfolgt dann ein dauerndes Laden und Entladen einer Kondensatorschaltung, damit das am Ausgang 32 erhaltene Dreiecksignal $\Delta_{SB}$ erzeugt wird. Der oben erläuterte, in Fig. 1 gezeigte Demodulatorteil, der in Fig. 2 gezeigte Vergleicher und die in Fig. 3 dargestellte Schaltung zum Erzeugen des Dreiecksignals $\Delta_{SB}$ sind mit zahlreichen anderen Schaltungsteilen gemeinsam auf einen Chip einer integrierten Schaltung ausgebildet. Da mit Hilfe der Register 22 und 24 und der Digitalwandler 26 und 28 der Verlauf des Dreiecksignals $\Delta_{SB}$ verändert wird, mit dessen Hilfe das Tastverhältnis des Signals $PWM_{SB}$ eingestellt wird, ist zum Justieren der Schaltung beim Hersteller des Audiogeräts keine externe Beschaltung mit Widerständen erforderlich. An den Stift des Chips, welcher das Feldstärkensignal $V_F$ empfängt, wird eine Reihe von Spannungswerten gegeben, und die Festlegung des oberen und des unteren Grenzwerts $V_{SBH}$ und $V_{SBL}$ (oder nur eines dieser Werte) erfolgt durch Eingabe eines Digitalwerts für das Register 22 bzw. das Register 24. Durch Auswahl eines geeigneten Werts läßt sich das PWM-Signal so einstellen, daß oberhalb eines bestimmten Pegels des Feldstärkensignals $V_F$ reiner Stereobetrieb erfolgt, daß unterhalb eines unteren Pegels des Signals $V_F$ ausschließlich Monobetrieb erfolgt, und daß (demzufolge) dann, wenn das Signal $V_F$ einen Wert zwischen den beiden genannten Grenzwerten aufweist, ein "Mischbetrieb" stattfindet.

**Patentansprüche**

1. Vorrichtung zum gleitenden Umsteuern eines Demodulators in einem Stereodecoder von Stereobetrieb auf Monobetrieb, und umgekehrt, wozu das Differenzsignal (L-R) des von einem HF-Teil einem Eingang (2, 4) des Demodulators zugeführten Multiplex-Stereosignals ($V_{MPX}$) mit einem veränderlichen Faktor (k) auf das Summensignal (L+R) des Multiplex-Stereosignals addiert wird, um an zwei Ausgängen getrennte Signale für die beiden Kanäle (L, R) zu erhalten, **dadurch gekennzeichnet, daß** der Faktor (k) durch einen im Signalweg (12) zwischen dem Eingang (2, 4) und jeweils einem Ausgang liegenden Schalter (8) realisiert wird, der von einem PWM-Signal ($PWM_{SB}$) angesteuert wird, dessen Tastverhältnis nach Maßgabe eines Feldstärkensignals ($V_F$) verändert wird, wozu dieses Feldstärkensignal ($V_F$) mit einem Referenz-Dreiecksignal verglichen wird, dessen Amplitude sich zwischen einem oberen und einem unteren Grenzwert ändert,
wobei der Stereodecoder mindestens ein Grenzwertspeicherregister (22, 24) aufweist, in das von außerhalb des Audioprozessors ein digitaler Grenzwert eingebbar ist, der in eine Analogspannung ($V_{SBH}$; $V_{SBL}$) umgesetzt wird und als Grenzwert einem Dreiecksignalgenerator (30) zugeführt wird.

2. Vorrichtung nach Anspruch 1,
**dadurch gekennzeichnet, daß** zwei Register (22, 24) für den oberen bzw. den unteren Grenzwert vorgesehen sind.

3. Vorrichtung nach Anspruch 1 oder 2,
**dadurch gekennzeichnet, daß** jedem Grenzwertspeicherregister (22, 24) ein Digital-Analog-Umsetzer (26, 28) zugeordnet ist.

4. Stereodecoder, **gekennzeichnet durch** eine Vorrichtung zum gleitenden Umsteuern nach einem der Ansprüche 1 bis 3.

## Claims

1. An apparatus for continuously switching a demodulator in a stereo decoder from stereo operation to mono operation, and vice versa, for which purpose the difference signal (L-R) of the multiplex stereo signal ($V_{MPX}$) supplied to an input (2, 4) of the demodulator by an RF section with a variable factor (k) is added to the sum signal (L+R) of the multiplex stereo signal in order to obtain separate signals for the two channels (L, R) at two outputs, **characterized in that** the factor (k) is realized by a switch (8) located in the signal path (12) between the input (2, 4) and each output and driven by a PWM signal ($PWM_{SB}$) whose pulse-width repetition rate is varied in accordance with a field strength signal ($V_F$), for which purpose this field strength signal ($V_F$) is compared with a reference triangular signal whose amplitude varies between an upper and a lower limit,
the stereo decoder having at least one limit storage register (22, 24) into which a digital limit is entered from outside the audio processor, being converted into an analog voltage ($V_{SBH}$; $V_{SBL}$) and supplied to a triangular signal generator (30) as a limit.

2. The apparatus of claim 1, **characterized in that** two registers (22, 24) are provided for the upper and lower limits, respectively.

3. The apparatus of claim 1 or 2, **characterized in that** a digital-to-analog converter (26, 28) is associated with each limit storage register (22, 24).

4. A stereo decoder, **characterized by** the continuous switching apparatus of any of claims 1 to 3.

## Revendications

1. Dispositif de commutation glissante d'un démodulateur dans un décodeur stéréo du mode stéréo en mode mono et vice versa, dans lequel le signal différentiel (L-R) du signal multiplex stéréo ($V_{MPX}$) alimenté à partir d'une partie HF à une entrée (2, 4) du démodulateur est additionné avec un facteur variable (k) au signal composite (L+R) du signal multiplex stéréo, afin d'obtenir sur deux sorties des signaux séparés pour les deux canaux (L, R), **caractérisé en ce que** le facteur (k) est obtenu par un commutateur (8) disposé dans le chemin (12) du signal entre l'entrée (2, 4) et une sortie respective, et commandé par un signal PWM ($PWM_{SB}$) dont le facteur d'utilisation est modifié en fonction de la valeur d'un signal d'intensité de champ ($V_F$), ledit signal d'intensité de champ ($V_F$) étant comparé à un signal de référence en delta dont l'amplitude est modifiée entre une valeur supérieure de seuil et une valeur inférieur de seuil, le décodeur stéréo comportant au moins un registre mémoire de valeurs de seuil (22, 24), dans lequel une valeur de seuil numérique peut être entrée de l'extérieur du processeur audio, cette valeur étant transformée en tension analogue ($V_{SBH}$ ; $V_{SBL}$) et alimentée comme valeur de seuil à un générateur de signaux delta (30).

2. Dispositif selon la revendication 1, **caractérisé en ce que** deux registres (22, 24) sont prévus pour la valeur de seuil supérieure respectivement inférieure.

3. Dispositif selon la revendication 1 ou 2, **caractérisé en ce qu'**un convertisseur numérique/analogique (26, 28) est associé à chaque registre mémoire de valeurs de seuil (22, 24).

4. Décodeur stéréo, **caractérisé par** un dispositif de commutation glissante selon l'une quelconque des revendications 1 à 3.

# FIG.1

# FIG.2

# FIG.3

## FIG. 4

## FIG. 5

**EP 0 821 544 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4332717 A